# EUROPEAN PATENT APPLICATION

(11) **EP 1 107 623 A2**
(43) Date of publication of application: **13.06.2001**
(21) Application number: 00310482.5
(22) Date of filing: 27.11.2000
(51) Int. Cl.: H04Q 7/32

(54) **Mobile station providing user-defined private zone for restricting access to user application data**

(30) Priority: 06.12.1999 US 455216
(71) Applicant: NOKIA MOBILE PHONES LTD., 02150 Espoo (FI)
(72) Inventor: Kivisto, Kari, Oulunsalo, FI-90460 (FI); Maenpaa, Pia, Oulu, FI-90500 (FI); Salmi, Ville, Oulu, FI-90520 (FI); Mikkulainen, Juha, Espoo, FI-02100 (FI)
(74) Representative: Read, Matthew Charles

(57) **Abstract**

A mobile station (10) is constructed to include a user interface (16), a memory (14) for storing data (15A-15F) entered by the user, through the user interface, under the control of a plurality of different applications, and a controller (12) that is coupled to the memory and to the user interface. The controller operates under the control of a stored program for interacting with the user through the user interface for selectively restricting access to the stored data associated with at least one of the applications. The controller is responsive to a request to access restricted data for displaying a message that the requested data is restricted from access, and then enabling access to the data only upon an occurrence of the user entering interacting with the user interface, such as by entering a predetermined code with the user interface.

## Description

### FIELD OF THE INVENTION:

This invention relates generally to mobile stations operable with a wireless network and, in particular, to mobile stations having a user interface that enables a user to store user-defined and user-specific data.

### BACKGROUND OF THE INVENTION:

Modern wireless mobile stations, such as radiotelephones and personal communicators, have or are expected to have enhanced user interface features that enable a user to store and maintain a calendar and organizer; an address directory with telephone numbers and other contact information, as well as personal notes regarding persons or organizations listed in the directory, a diary, email facilities, short message service (SMS) facilities, as well as certain settings (e.g., language selection and profiles.) As can be appreciated, some or all of this information may be of a personal and/or confidential nature, such that the user would not wish others to have access to the stored information.

While a mobile station is typically the property of one individual, under some circumstances the user may lend the mobile station to a related or an unrelated person who wishes to make a call. Furthermore, a user who is traveling or who is attending a meeting may inadvertently leave his or her mobile station unattended for some period of time. During such periods another person could access the personal and/or confidential information stored in the mobile station, to the detriment of the owner of the mobile station.

It is known to employ a code to lock and unlock certain features of the mobile station. For example, an ability to make or originate certain types of calls, such as long distance calls, can be selectively enabled and disabled by entering a predetermined lock/unlock code or a personal identification number (PIN) code. The mobile station may also be locked as an entity, for example as in a GSM phone prior to PIN entry, or with a "phone lock" feature.

It is also known to provide, in a handheld personal organizer type device, a capability to define as private individual user records, but not entire applications. Furthermore, in this prior art approach the user may have no indication that a requested record has been marked as private (e.g., blank spaces may simply appear in place of the requested private record.) The user may need to go to a security menu in order to request that all private records be shown.

### OBJECTS AND ADVANTAGES OF THE INVENTION:

It is a first object and advantage of this invention to provide an improved mobile station that enables a user to restrict access to certain stored application-related information.

It is a further object and advantage of this invention to provide a mobile station having a user interface that enables a user to define and establish a "private zone" for user data, such that data within the private zone is not accessible without knowledge of a predetermined code.

### SUMMARY OF THE INVENTION

The foregoing and other problems are overcome and the objects are realized by methods and apparatus in accordance with embodiments of this invention.

More specifically, a method is provided for use with a mobile station of a wireless communications system, the method for selectively restricting access to data stored in a memory of the mobile station and including steps of (a) interacting with a user interface of the mobile station for restricting access to the data; (b) in response to a request to access the data, displaying a message that the requested data is restricted from access; and (c) providing access to the data only upon an occurrence of a user interacting with the user interface, such as by entering a predetermined code with the user interface. The step of displaying a message preferably includes a step of displaying a prompt for the user to enter the predetermined code.

If the user enters an incorrect code, or no code at all, the method executes a further step of displaying a prompt for the user to enter the predetermined code. In another embodiment, if the user enters an incorrect code, or no code at all, the method executes a further step of exiting a current level of a multi-level hierarchy of menu display screens, and entering a next higher level of the multi-level hierarchy of menu display screens. This can occur on the first entry of an incorrect or no code, or after some predetermined number of retries. Error messages can be displayed to indicate to the user that an incorrect code has been entered. The method may execute the further step of exiting the current level of a multi-level hierarchy of menu display screens, and entering the next higher level of the multi-level hierarchy of menu display screens, or entering an Idle state, upon the user entering a "back" or similar command.

A mobile station that is constructed and operated in accordance with the teachings of this invention includes a user interface, a memory for storing data entered by the user, through the user interface, under the control of a plurality of different applications, and a controller that is coupled to the memory and to the user interface. The controller operates under the control of a stored program for interacting with the user through the user interface for selectively restricting access to the stored data associated with at least one of the applications. The controller is responsive to a request to access restricted data for displaying a message that the requested data is restricted from access, and then enabling access to the data only upon an occurrence of the user interacting with the user interface, such as by entering the predetermined code with the user interface.

### BRIEF DESCRIPTION OF THE DRAWINGS

The above set forth and other features of the invention are made more apparent in the ensuing Detailed Description of the Invention when read in conjunction with the attached Drawings, wherein:
Fig. 1 is block diagram of a mobile terminal in accordance with an embodiment of this invention; and
Fig. 2 is a logic flow diagram of a presently preferred embodiment of a method for inhibiting access to stored data in the mobile station of Fig. 1.

### DETAILED DESCRIPTION OF THE INVENTION

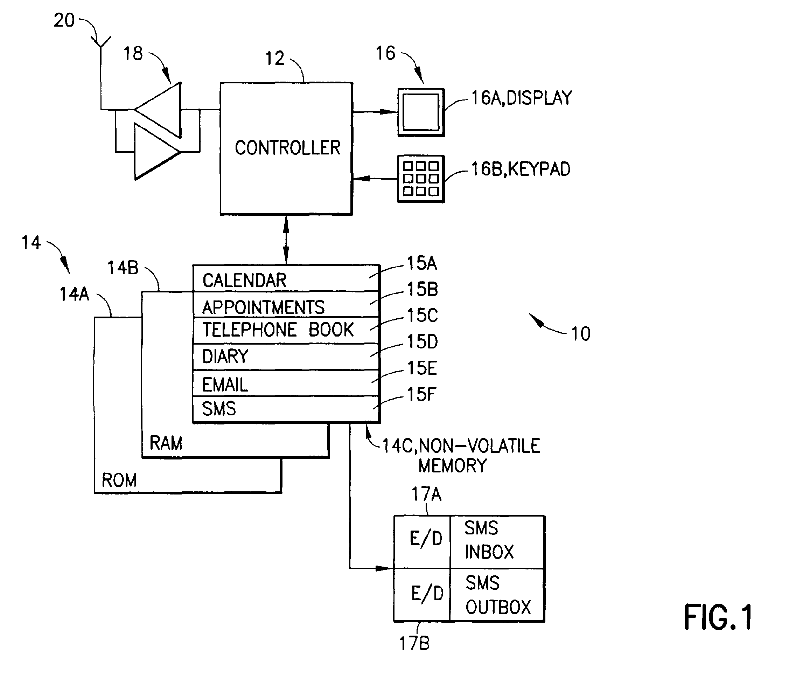

Fig. 1 depicts a simplified block diagram of a mobile station 10 having a mobile station controller 12, typically a suitably programmed microprocessor, a memory 14 for storing data, including operating programs for the controller 12, data received from a wireless network (not shown), such as short message service (SMS) data, and data entered through a user interface 16 by a user. The user interface 16 typically includes a display screen 16A and a keyboard of keypad 16B, although in other embodiments voice synthesis and voice recognition functions could replace or be used in conjunction with the display 16A and the keypad 16B, respectively. An electronic pen or stylus could be used as well as a data entry device. The mobile station 10 also includes a transceiver 18 and antenna 20 for transmitting to and receiving from various frequency channels. The mobile station 10 may be a radiotelephone, a cellular telephone, a personal communicator, an electronics card or module that is fixably or removably installed within another system, such as a PC, etc. In this latter embodiment the user interface 16 may be the display and keyboard of the PC. The mobile station 10 could as well be coupled to a PC through a cable or a wireless (e.g., IR) link, and could thus employ the display and/or keyboard of the PC as an adjunct to the display 16A and the keypad 16B.

In general, and whether or not the user interface 16 is implemented in the mobile station 10 or in some external device, such as a PC, it is preferred to display on display 16A a hierarchy of menu display screens and to use the keypad 16B or the like to navigate through the menu display screens in order to reach a level wherein data can be entered. As but one example, assume that a highest level display screen enables a user to select an item designated "Personal Data". After selecting "Personal Data", a next lower-level display screen offers a choice between "Phone Book", or "Appointments", or "Calendar", or "SMS" applications. If "Phone Book" is selected, then a next lower level display screen might enable the user to select "View", "Delete", "Add", "Modify", etc., whereas if "SMS" were selected a next lower level display screen might prompt the user to select one of "SMS Inbox" or "SMS Outbox", with further choices and selections being made thereafter.

The memory 14 is assumed to include read only memory (ROM) 14A, read/write random access memory (RAM) 14B, and non-volatile read/write memory 14C. The non-volatile memory is preferred for use in storing data entered by the user (as well as certain data entered by the wireless system, network operator, or dealer), that is expected may be changed from time to time. Of most interest to the teachings of this invention is the user-entered data that is stored by various applications (e.g., such as the "Phone Book", "Appointments", "Calendar", or "SMS" applications referred to above), and which the user desires to maintain private or confidential. These specific applications, as well as other applications, and more specifically the associated portions of non-volatile memory 14C, may include a calendar 15A, an appointment reminder 15B, a telephone book (possibly including notes, addresses and other contact information) 15C, a diary 15D, email messages 15E (both those sent and received), and short message service (SMS) messages 15F (both those sent and received.) As may be appreciated, the data stored in one or more of these memory portions may be of a private or confidential nature.

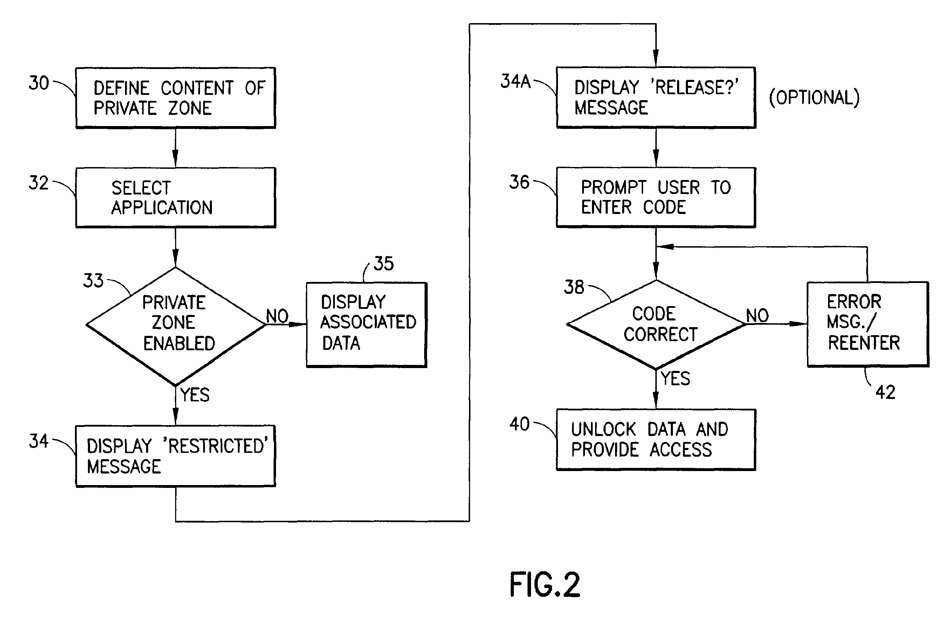

Referring now to Fig. 2, a description will now be made of the operation of the controller 12 in implementing a presently preferred embodiment of a method in accordance with the teachings of this invention.

At Step 30 the user interacts with a "Private Zone" application that displays, for example, a list of applications that potentially contain data that a user may desire to treat in a private or confidential manner. These applications could be those mentioned above, and could include "Phone Book", "Appointments", "Calendar", "SMS Inbox", "SMS Outbox", "Email Inbox", "Email Outbox", etc. The current "Private Zone" status of each of these applications may also be displayed (e.g., private zone "enabled" or "disabled", or by the use of some suitable icon or icons.) By selecting a particular entry using, for example, up-down and/or left-right arrow keys on the keypad 16B, and then depressing another keypad key, the current status is toggled (e.g., "Email Inbox" private zone "enabled" changes to "Email Inbox" private zone "disabled", and vice versa.) A "tick box" type of selection could be used as well, such as: 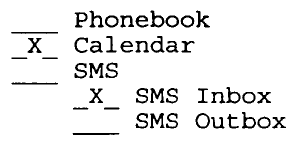 wherein the Calendar application and the SMS Inbox sub-application have been selected for being placed in the user's Private Zone.

See, for example, in Fig. 1 where the exemplary SMS 15F memory region is differentiated into SMS Inbox and SMS Outbox subregions, each having an associated Private Zone flag 17A, 17B for indicating whether the Private Zone is Enabled (E) or Disabled (D) for the associated stored information. In this manner the user is enabled to selectively enable and disable (i.e., turn on and turn off) the private zone feature for the stored data associated with individual ones of applications and sub-applications.

It is desirable to first require the user to enter an authorization code, such as a PIN code or any suitable private access code or password code (which could be numbers, or text characters, or a combination of text and numbers), before giving the user the ability to enter the Private Zone application, and to selectively enable and disable the Private Zone feature for different applications.

In another embodiment the user is only permitted to enable (turn on) the Private Zone lock for individual ones of the displayed applications, with the Private Zone lock being subsequently removed or released only after the user has selected the particular locked application for access, as will be described below.

At Step 32, and at some future time, it is assumed that the same or a different user interacts with the user interface 16 to select one of the applications of interest. At Step 33, if an application is selected (e.g., SMS Outbox) for which the Private Zone is not enabled, then the user has access to the application, and the data stored within the application, in a normal manner (Step 35). However, if an application is selected (e.g., SMS Inbox) for which the Private Zone was previously enabled, then the user is restricted or barred from access to the application, and the data stored within the application. At Step 34 the controller 12 displays for some period of time a suitable message, such as "Requested Application is Restricted", and then may automatically move one user interface level higher in the hierarchy of display screens. That is, the controller 12 may cause the user interface to exit a current level of the multi-level hierarchy of menu display screens, and to enter a next higher level of the multi-level hierarchy of menu display screens. Alternatively, the controller 12 can display a message to request the user to enter the Private Zone code, either after or in lieu of displaying the restricted message to the user.

At Step 34A the user interface 16A optionally displays a selectable option, such as "Release". If the user selects Release while it is displayed then the user interface prompts the user at Step 36 to enter a code, which may be referred to as a "Private Lock Code". This could be the user's normal PIN number, or it could be another code defined just for the Private Zone application (any combination of numbers, letters, number and letters, numbers/letters and special characters (e.g., 5AK4?>#67!). Alternatively, it may be assumed that the user wishes to enter the menu, so the password is requested immediately, without displaying the selectable option (e.g., "Release"). At Step 38 it is determined if the user enters the correct Private (Un)Lock Code. If yes, then the data stored for the requested application is made available to the user, and the Private Zone lock is unlocked (Step 40). However, if the user enters an incorrect Private Zone (Un)Lock code, or no code at all, then at Step 42 the controller 12 may display for some period of time a suitable error message, such as "Private Zone Code is Incorrect". The user also may be prompted to enter the correct code, however access is denied until the correct code is entered. The user may also enter "back", or may enter "exit" to terminate the code entry.

In accordance with the example given thus far, if "SMS Inbox" is protected by the Private Zone feature, and if the user does not enter the correct unlock or enable code, or enters no code at all, then controller 12 can deny access to the requested private data and display a suitable error message and/or prompt for the correct code or password. In other embodiments of this invention the controller 12 could automatically move one user interface level higher in the hierarchy of menu display screens, thereby denying the user access to the data of the previously selected and locked application (e.g., SMS Inbox). Alternately, the user may enter "back" or "exit" or "quit", and the controller 12 in response causes the user interface to automatically move up one level to, for example, the menu display screen that displays the list of available options: e.g., "Phone Book", "Appointments", "Calendar", "SMS", under the next higher level display screen of "Personal Data". In this case, and if the user presses "back" or "exit" or "quit", then the controller 12 backsteps one level, or else goes to the Idle state, depending on the key that was depressed.

The release of the Private Zone lock can be permanent (i.e., until subsequently re-established by the user), or it may be on a one time basis, thereby enabling access to the data only for this particular inquiry. For example, after exiting the unlocked SMS Inbox application the Private Zone lock is re-established so that a subsequent selection of this application will again find that access to the application's data is restricted. The user may also permanently remove the SMS Inbox from the "Private Zone" to enable free and unfettered access to the SMS Inbox.

Those skilled in the art will appreciate that any number of user interface interactions can be designed, from the simple to the complex, for enabling the user to lock and then subsequently unlock certain applications that have the potential to store information that the user wishes to treat as private or confidential, and that the user does not wish others to view. As such, the particular user interface embodiments described above should be viewed as exemplary, and in no way in a limiting sense upon the practice of this invention.

For example, the mobile station may be capable of storing a plurality of Phone Books, each of which could be separately locked and then released using the same one or different individual Private Zone lock codes.

Furthermore, it is within the scope of this invention to restrict or enable access permanently with a code or password, as well as to temporarily overrule the restriction by entry of the correct code or password, thereby enabling the user to selectively gain access to a desired application or sub-application. It is also within the scope of this invention to selectively activate the private zone at the application level, for each application or part of an application separately, as well as to activate/deactivate the private zone for a number of applications from one menu using, for example, the tick box approach discussed above.

It is also within the scope of this invention to remove the private zone through any desired application. For example, when entering a restricted application the user can at the same time remove the restriction from all applications.

A "lock all" feature may be provided as well, wherein all application menus are restricted from entry, but where the user is still enabled to make and receive phone calls.

The use of the private zone feature enables the identifiers of applications to still be displayed normally, e.g., "SMS", "Calendar", etc., even when the application has been assigned to the private zone. Only when the user attempts to access the application is he informed that the application is in the private zone, either by a message expressly stating so, or impliedly by requesting the password or code. After exiting the requested application the private zone restriction is again applied, unless it was expressly removed by the user.

Thus, while the invention has been particularly shown and described with respect to preferred embodiments thereof, it will be understood by those skilled in the art that changes in form and details may be made therein without departing from the scope and spirit of the invention.

## Claims

1. A method for selectively restricting access to data stored in a memory of a mobile station, comprising steps of:
interacting with a user interface of the mobile station for restricting access to the data;
in response to a request to access the data, displaying a message that the requested data is restricted from access; and
providing access to the data only upon an occurrence of a user interaction with the user interface to release the restriction.

2. A method as in claim 1, wherein the step of displaying a message includes a step of displaying a prompt for the user to enter a predetermined code.

3. A method as in claim 2, wherein if the user enters an incorrect code, or no code at all, the method comprises a further step of prompting the user again to enter the predetermined code.

4. A method as in claim 2, wherein if the user enters an incorrect code, or no code at all, the method comprises a further step of exiting a current level of a multi-level hierarchy of menu display screens, and entering a next higher level of the multi-level hierarchy of menu display screens.

5. A method as in claim 1, wherein the user restricts or enables access permanently with a predetermined code or password.

6. A method as in claim 1, wherein the user temporarily overrules a restriction by entry of a correct code or password.

7. A method as in claim 1, wherein the user activates the restriction at an application level, for each application or part of an application separately.

8. A method as in claim 1, wherein the user activates or deactivates the restriction for a number of applications from one menu.

9. A method as in claim 1, wherein the user, when entering a restricted application, at the same time removes the restriction from all restricted applications.

10. A mobile station, comprising:
a user interface;
a memory for storing data entered by the user through said user interface under the control of a plurality of different applications; and
a controller that is coupled to said memory and to said user interface and operating under the control of a stored program for interacting with the user through said user interface for selectively restricting access to the stored data associated with at least one of said applications, said controller being responsive to a request to access restricted data for displaying a message that the requested data is restricted from access, said controller enabling access to the data only upon an occurrence of the user interacting with said user interface.

11. A mobile station as in claim 10, wherein said controller further displays a prompt for the user to enter a predetermined code.

12. A mobile station as in claim 11, wherein if the user enters an incorrect code, or no code at all, said controller operates so as to prompt the user again to enter the predetermined code.

13. A mobile station as in claim 11, wherein if the user enters an incorrect code, or no code at all, said controller operates so as to quit the display of a current level of a multi-level hierarchy of menu display screens, and to display instead a next higher level of the multi-level hierarchy of menu display screens.
